# FASCICULE DE BREVET EUROPEEN

(11) **EP 4 370 279 B1**
(45) Date de publication et mention de la délivrance du brevet: **03.09.2025**
(21) Numéro de dépôt: 22747674.4
(22) Date de dépôt: 08.07.2022
(51) Int. Cl.: B23Q 1/76, B29C 64/10, B33Y 10/00, B33Y 30/00, B22F 10/38, B22F 10/40, B22F 12/10, B22F 12/20, B23Q 3/06, B29C 64/245

(54) **MACHINE DE FABRICATION HYBRIDE COMBINANT L'IMPRESSION 3D ET L'USINAGE ET COMPORTANT UN SUPPORT ARTICULÉ**
HYBRIDHERSTELLUNGSMASCHINE MIT KOMBINATION AUS 3D-DRUCKEN UND BEARBEITUNG UND MIT EINER GELENKSTÜTZE
HYBRID MANUFACTURING MACHINE COMBINING 3D PRINTING AND MACHIING AND HAVING AN ARTICULATED SUPPORT

(30) Priorité: 13.07.2021 FR 2107595
(43) Date de publication de la demande: 22.05.2024
(73) Titulaire: Be.Ta+ Bien Etre Et Technologies Avancees Produit Et Logiciel Dans Un Systeme, La Reinais (FR)
(72) Inventeur: MOIGNE, Pascal, 35260 TEILLAY (FR); RENAULT, Joël, 35830 BETTON (FR); MOIGNE, Pascal, 35620 TEILLAY (FR)
(74) Mandataire: Cabinet Le Guen Maillet
(86) Numéro de dépôt international: PCT/EP2022/069159
(87) Numéro de publication internationale: WO 2023/285320

(56) Documents cités:
- WO-A1-2021/040712
- CN-A- 107 696 474
- US-A1- 2015 000 108
- US-A1- 2020 290 287

## Description

### DOMAINE TECHNIQUE

La présente invention concerne une machine de fabrication hybride qui combine l'impression 3D et l'usinage d'une pièce et qui comporte au moins un support articulé, ainsi qu'un procédé de fabrication d'une pièce mettant en œuvre une telle machine.

### ÉTAT DE LA TECHNIQUE ANTÉRIEURE

Actuellement, de nombreuses machines permettent de réaliser des pièces par impression 3D, en particulier par une technologie additive, aussi bien en métal qu'en matière synthétique.

Il existe aussi des machines d'usinage telles qu'une fraiseuse qui permettent de réaliser une pièce par retrait de matière.

Afin de combiner les deux technologies, des machines de fabrication hybride ont été développées. Une telle machine comporte un châssis sur lequel est fixé un plateau et sur lequel sont montées une tête d'impression et une tête d'usinage.

La machine comporte également un système de déplacement monté entre le châssis et les têtes pour déplacer chaque tête au-dessus du plateau selon au moins trois directions.

De la même manière, la tête d'impression est alimentée en produit prenant par exemple la forme d'un fil. La tête d'impression inclut classiquement des moyens de chauffage qui font fondre le produit dans la tête d'impression et l'expulsent.

Le principe de fonctionnement est alors le suivant.

La tête d'impression se déplace ainsi au-dessus du plateau et dépose des couches les unes au-dessus des autres de manière à former une pièce brute. Comme toute technologie additive, la pièce n'est pas maintenue lors de l'impression et tient uniquement par l'adhérence de sa base sur le plateau.

Au cours ou en fin d'impression, la tête d'usinage vient usiner la pièce imprimée. L'usinage peut être par exemple un fraisage ou un perçage.

Une telle machine de fabrication hybride présente de nombreux avantages en termes de flexibilité et de temps pour réaliser la pièce.

Cependant, lors de l'usinage, la tête d'usinage exerce une forte pression sur la pièce. Lors de l'usinage, par exemple lors du fraisage d'un mur, il peut arriver que la base de la pièce se décolle du plateau, ou que le mur plie sous l'effet de la pression, ce qui peut engendrer des défauts dans la pièce finale. WO 2021/040712 A1 décrit une machine de fabrication hybride selon le préambule de la revendication 1.

### EXPOSÉ DE L'INVENTION

Un objet de la présente invention est de proposer une machine de fabrication hybride qui combine l'impression 3D et l'usinage d'une pièce et qui comporte au moins un support articulé qui permet de venir contrer la pression exercée sur la pièce lors de l'usinage.

À cet effet, est proposée une machine de fabrication hybride selon la revendication 1.

Avec un tel support, la pièce peut être maintenue pendant l'impression et l'usinage.

Avantageusement, la ou au moins une tête d'appui embarque un système de refroidissement qui génère du froid.

Avantageusement, la tête d'appui embarque un capteur de température qui mesure la température au niveau de la face de la tête d'appui qui est destinée à être contre la pièce, la machine comporte une unité de contrôle qui est en communication avec le capteur de température et le système de refroidissement et l'unité de contrôle est paramétrée pour commander le système de refroidissement en fonction de la température relevée par le capteur de température et d'une température cible à atteindre.

Avantageusement, la ou au moins une tête d'appui embarque un système de chauffage qui génère du chaud.

Avantageusement, la tête d'appui embarque également un capteur de température qui mesure la température au niveau de la face de la tête d'appui qui est destinée à être contre la pièce, la machine comporte une unité de contrôle qui est en communication avec le capteur de température et le système de chauffage, et l'unité de contrôle est paramétrée pour commander le système de chauffage en fonction de la température relevée par le capteur de température et d'une température cible à atteindre.

L'invention propose également un procédé de fabrication d'une pièce avec une machine de fabrication hybride selon l'invention comportant deux paires de supports, où le procédé comporte :
- une première étape de maintien, au cours de laquelle une première paire de supports maintient la pièce au niveau d'une première zone d'usinage
- une première étape d'usinage au cours de laquelle la tête d'usinage usine ladite première zone d'usinage,
- une deuxième étape de maintien, au cours de laquelle une deuxième paire de supports maintient la pièce au niveau d'une deuxième zone d'usinage,
- lorsque l'usinage de ladite première zone d'usinage est terminé, une première étape de relâchement au cours de laquelle la première paire de supports relâche la pièce,
- une deuxième étape d'usinage au cours de laquelle la tête d'usinage usine ladite deuxième zone d'usinage,
- une troisième étape de maintien, au cours de laquelle la première paire de supports maintient la pièce au niveau d'une troisième zone d'usinage,
- lorsque l'usinage de ladite deuxième zone d'usinage est terminé, une deuxième étape de relâchement au cours de laquelle la deuxième paire de supports relâche la pièce, et
- une étape de bouclage sur la première étape d'usinage.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une représentation schématique d'une machine de fabrication hybride selon l'invention, et
Fig. 2 est une représentation schématique d'une machine de fabrication hybride selon l'invention.

### EXPOSÉ DÉTAILLÉ DE MODES DE RÉALISATION

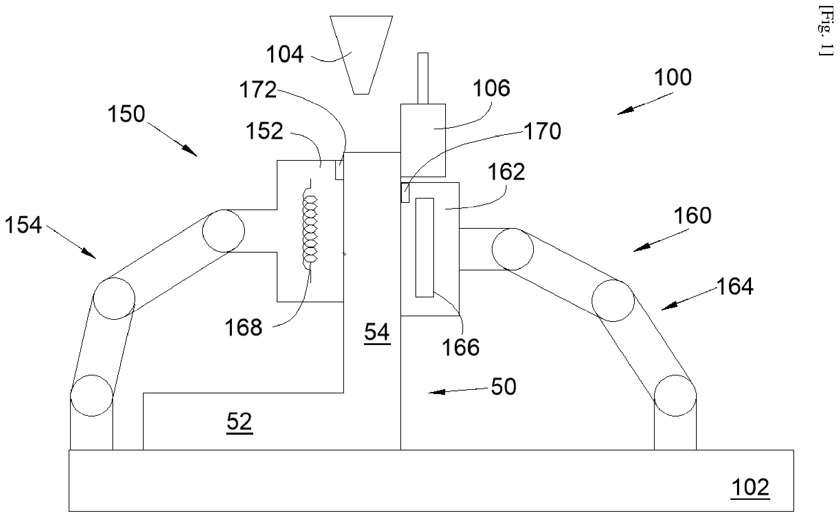

La Fig. 1 montre une machine de fabrication hybride 100 qui comporte classiquement un châssis sur lequel est fixé un plateau 102, et sur lequel sont montées mobiles une tête d'impression 104 et une tête d'usinage 106.

La machine 100 comporte également un système de déplacement monté entre le châssis et les têtes pour déplacer chaque tête d'impression 104 et d'usinage 106 au-dessus du plateau 102 selon au moins trois directions. Un tel système de déplacement n'est pas décrit plus avant car il est connu de l'homme du métier.

De la même manière, la tête d'impression 104 est alimentée en produit prenant par exemple la forme d'un fil. La tête d'impression 104 inclut classiquement des moyens de chauffage qui font fondre le produit dans la tête d'impression 104 et l'expulsent.

La tête d'impression 104 se déplace ainsi au-dessus du plateau 102 et dépose des couches les unes au-dessus des autres de manière à former une pièce 50. Ici, la pièce 50 prend la forme d'une équerre avec une base 52 qui repose sur le plateau 102 et un mur 54 qui s'étend depuis la base 52 perpendiculairement au plateau 102. Bien sûr la pièce 50 peut prendre une autre forme. Le plateau 102 sert de support à la pièce 50, ici à la base 52.

Après avoir réalisé, entièrement ou en partie la pièce 50, la tête d'impression 104 est déplacée pour laisser la place à la tête d'usinage 106 qui va usiner la pièce 50. Dans le mode de réalisation de l'invention présenté sur la Fig. 1, la tête d'usinage 106 porte une fraise et vient usiner un côté du mur 54.

Afin d'assurer le maintien en position du mur 54 malgré la pression de la tête d'usinage 106, la machine 100 comporte un premier support 150 qui est monté sur le châssis, et plus particulièrement ici, sur le plateau 102. Le premier support 150 comporte une tête d'appui 152 et un bras 154 fixé entre la tête d'appui 152 et le châssis, et plus particulièrement ici, sur le plateau 102.

Le bras 154 est un bras articulé qui permet de positionner la tête d'appui 152 de manière appropriée, c'est-à-dire ici contre le côté du mur 54 opposé au côté contre lequel se déplace la tête d'usinage 106.

Dans le mode de réalisation de l'invention présenté sur la Fig. 1, la machine 100 comporte un deuxième support 160 qui est également monté sur le châssis, et plus particulièrement ici, sur le plateau 102. Le deuxième support 160 comporte également une tête d'appui 162 et un bras 164 fixé entre la tête d'appui 162 et le châssis, et plus particulièrement ici, sur le plateau 102.

Le bras 164 est également un bras articulé qui permet de positionner la tête d'appui 162 de manière appropriée, c'est-à-dire ici contre le côté du mur 54 contre lequel se déplace la tête d'usinage 106.

D'une manière générale, la machine 100 comporte ainsi au moins un support 150, 160 avec au moins une tête d'appui 152, 162, la ou chaque tête d'appui 152, 162 étant destinée à être en appui contre une partie de la pièce 50 et au moins un bras 154, 164 articulé, le ou chaque bras 154, 164 présentant une première extrémité solidaire de la ou l'une des têtes d'appui 152, 162 et une deuxième extrémité solidaire du châssis ou, comme ici, du plateau 102.

Dans le mode de réalisation de l'invention présenté ici, chaque bras 154, 164 présente trois articulations, mais un nombre différent est possible. Chaque articulation est suffisamment souple pour permettre sa rotation lors du positionnement de la tête d'appui 152, 162 et suffisamment rigide pour ne pas bouger lors de l'usinage par la tête d'usinage 106.

Chaque articulation peut comporter un moyen de verrouillage qui peut prendre alternativement une position libre autorisant le mouvement de l'articulation ou une position figée empêchant le mouvement de l'articulation. Le moyen de verrouillage est par exemple une vis de serrage.

La présence du premier support 150 et 160 permet de contrer la pression exercée sur le mur 54 lors de l'usinage par la tête d'usinage 106. Dans le mode de réalisation de l'invention présenté sur la Fig. 1, la mise en place des deux supports 150 et 160 de part et d'autre du mur 54 permet de serrer la pièce 50 et ainsi la maintenir en position. Ainsi, avec au moins un support 150, 160, la pièce 50 peut être réalisée sans risque de défaut.

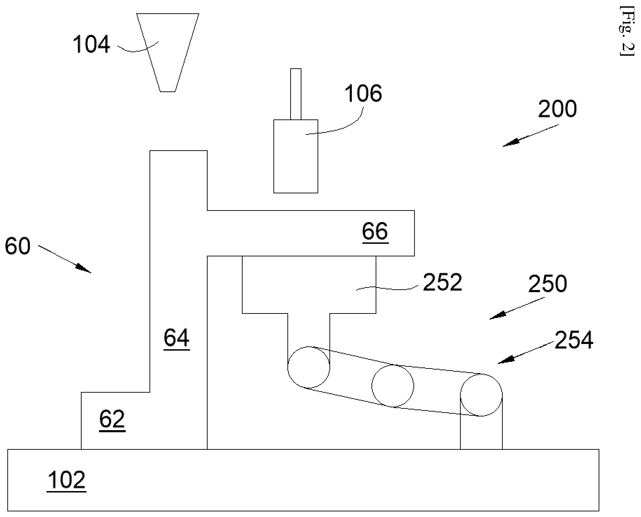

La Fig. 2 montre une machine de fabrication hybride 200 similaire à celle de la Fig. 1 sauf en ce que la pièce 60 présente une base 62 qui repose sur le plateau 102, un mur 64 qui s'étend depuis la base 62 perpendiculairement au plateau 102 et un plan horizontal 66 qui s'étend depuis le mur 64 parallèlement au plateau 102 et en ce que le support 250 est disposé de manière à soutenir le plan 66. Bien sûr le plan pourrait avoir une inclinaison différente.

Le support 250 est monté sur le châssis, et plus particulièrement ici, sur le plateau 102 et il comporte une tête d'appui 252 et un bras 254 fixé entre la tête d'appui 252 et le châssis, et plus particulièrement ici, sur le plateau 102.

Le bras 254 est un bras articulé qui permet de positionner la tête d'appui 252 de manière appropriée, c'est-à-dire ici sous le plan 66. Dans une telle position, la tête d'appui 252 permet de soutenir le plan 66 lors de sa réalisation par la tête d'impression 104 et lors de l'usinage par la tête d'usinage 106.

Les modes particuliers décrits ci-dessous sont décrits sur la base de la Fig. 1, mais ils s'appliquent également au mode de réalisation de la Fig. 2.

Pour diminuer le temps de refroidissement du matériau provenant de la tête d'impression, la tête d'appui 162 embarque un système de refroidissement 166 qui génère du froid et qui peut être par exemple une cellule à effet Peltier ou une canalisation dans laquelle circule un fluide caloporteur froid.

Pour gérer au mieux la température, la tête d'appui 162 embarque également un capteur de température 170 qui mesure la température au niveau de la face de la tête d'appui 162 qui est contre la pièce 50, et la machine 100 comporte une unité de contrôle qui est en communication avec le capteur de température 170 et le système de refroidissement 166. L'unité de contrôle est paramétrée pour commander le système de refroidissement 166 en fonction de la température relevée par le capteur de température 170 et d'une température cible à atteindre.

Pour maîtriser le réchauffement de la pièce 50 si nécessaire, par exemple avant l'usinage ou pour l'ajout de matière, la tête d'appui 152 embarque un système de chauffage 168 qui génère du chaud et qui peut être par exemple une résistance électrique ou une canalisation dans laquelle circule un fluide caloporteur chaud.

Pour gérer au mieux la température, la tête d'appui 152 embarque également un capteur de température 172 qui mesure la température au niveau de la face de la tête d'appui 152 qui est contre la pièce 50, et la machine 100 comporte une unité de contrôle qui est en communication avec le capteur de température 172 et le système de chauffage 168. L'unité de contrôle est paramétrée pour commander le système de chauffage 168 en fonction de la température relevée par le capteur de température 172 et d'une température cible à atteindre.

Le système de refroidissement 166 et le système de chauffage 168 peuvent être intégrés dans une même tête d'appui pour générer alternativement du froid ou du chaud. Dans ce cas, les capteurs de température et l'unité de contrôle peuvent être communs.

Du fait que l'ajout de matière par la tête d'impression 104 s'effectue par le haut, les capteurs de température 170 et 172 sont préférentiellement disposés en partie haute des têtes d'appui 152, 162 pour être au plus près de la zone chaude.

La face de la tête d'appui 152, 162, 252 qui est contre la pièce 50, 60 peut présenter un état de surface particulier qui se reproduira sur la pièce lors de sa fabrication, par exemple pour réaliser un décor de la pièce 50, 60.

Le positionnement de chaque tête d'appui 152, 162, 252 peut s'effectuer manuellement ou automatiquement par un système robotisé approprié. À partir de la géométrie de la pièce 50, 60, le système robotisé est alors prévu pour calculer, pour chaque tête d'appui 152, 162, 252, la position que ladite tête doit prendre pour remplir sa fonction.

Par exemple, lorsque la pièce 50, 60 est relativement longue, il est nécessaire de la maintenir sur toute la longueur au fur et à mesure de l'avancée de la tête d'usinage 106.

Ainsi, selon un mode de réalisation particulier, la machine de fabrication hybride 100, 200 comporte au moins quatre supports 150, 160, 250. Les supports 150, 160, 250 fonctionnent alors par paire, les supports d'une première paire maintiennent la pièce 50, 60 au niveau d'une première zone d'usinage où la tête d'usinage 106 travaille, pendant que les supports de la deuxième paire sont déplacés pour venir tenir un autre endroit de la pièce 50, 60 qui correspond à une deuxième zone d'usinage où la tête d'usinage 106 se déplacera lorsqu'elle aura fini avec la première zone d'usinage et lorsque la tête d'usinage 106 sera au niveau de la deuxième zone d'usinage, les supports de la première paire seront à leur tour déplacés pour tenir une troisième zone d'usinage à venir. Ainsi, deux supports maintiennent toujours la pièce et restent en position tant que les deux autres supports ne sont pas en place et ne maintiennent pas la pièce.

Un procédé de fabrication mis en œuvre par une telle machine de fabrication hybride 100, 200 comporte ainsi :
- une première étape de maintien, au cours de laquelle une première paire de supports maintient la pièce au niveau d'une première zone d'usinage,
- une première étape d'usinage au cours de laquelle la tête d'usinage 106 usine ladite première zone d'usinage,
- une deuxième étape de maintien, au cours de laquelle une deuxième paire de supports maintient la pièce au niveau d'une deuxième zone d'usinage,
- lorsque l'usinage de ladite première zone d'usinage est terminé, une première étape de relâchement au cours de laquelle la première paire de supports relâche la pièce,
- une deuxième étape d'usinage au cours de laquelle la tête d'usinage 106 usine ladite deuxième zone d'usinage,
- une troisième étape de maintien, au cours de laquelle la première paire de supports maintient la pièce au niveau d'une troisième zone d'usinage,
- lorsque l'usinage de ladite deuxième zone d'usinage est terminé, une deuxième étape de relâchement au cours de laquelle la deuxième paire de supports relâche la pièce, et
- une étape de bouclage sur la première étape d'usinage tant que la pièce doit être maintenue.

## Revendications

1. Machine de fabrication hybride (100, 200) comportant :
- un châssis,
- un plateau (102) fixé au châssis et destiné à servir de support à une pièce (50, 60),
- une tête d'impression (104),
- une tête d'usinage (106), et
- un système de déplacement monté entre le châssis et les têtes (104, 106) pour déplacer chaque tête (104, 106) au-dessus du plateau (102),
- -au moins un support (150, 160, 250) avec au moins une tête d'appui (152, 162, 252), la ou chaque tête d'appui (152, 162) étant destinée à être en appui contre une partie de la pièce (50, 60) la machine étant **caractérisée en ce qu'**elle comporte au moins un bras (154, 164, 254) articulé, le ou chaque bras (154, 164) présentant une première extrémité solidaire de la tête d'appui (152, 162, 252) et une deuxième extrémité solidaire du châssis ou du plateau (102).

2. Machine de fabrication hybride (100) selon la revendication 1, **caractérisée en ce que** la ou au moins une tête d'appui (162) embarque un système de refroidissement (166) qui génère du froid.

3. Machine de fabrication hybride (100) selon la revendication 2, **caractérisée en ce que** la tête d'appui (162) embarque un capteur de température (170) qui mesure la température au niveau de la face de la tête d'appui (162) qui est destinée à être contre la pièce (50), **en ce que** la machine (100) comporte une unité de contrôle qui est en communication avec le capteur de température (170) et le système de refroidissement (166) et **en ce que** l'unité de contrôle est paramétrée pour commander le système de refroidissement (166) en fonction de la température relevée par le capteur de température (170) et d'une température cible à atteindre.

4. Machine de fabrication hybride (100) selon l'une des revendications 1 à 3, **caractérisée en ce que** la ou au moins une tête d'appui (152) embarque un système de chauffage (168) qui génère du chaud.

5. Machine de fabrication hybride (100) selon la revendication 4, **caractérisée en ce que** la tête d'appui (152) embarque également un capteur de température (172) qui mesure la température au niveau de la face de la tête d'appui (152) qui est destinée à être contre la pièce (50), **en ce que** la machine (100) comporte une unité de contrôle qui est en communication avec le capteur de température (172) et le système de chauffage (168), et **en ce que** l'unité de contrôle est paramétrée pour commander le système de chauffage (168) en fonction de la température relevée par le capteur de température (172) et d'une température cible à atteindre.

6. Procédé de fabrication d'une pièce (50, 60) avec une machine de fabrication hybride (100, 200) selon la revendication 1 comportant deux paires de supports (150, 160, 250), où le procédé comporte :
- une première étape de maintien, au cours de laquelle une première paire de supports maintient la pièce au niveau d'une première zone d'usinage,
- une première étape d'usinage au cours de laquelle la tête d'usinage (106) usine ladite première zone d'usinage,
- une deuxième étape de maintien, au cours de laquelle une deuxième paire de supports maintient la pièce au niveau d'une deuxième zone d'usinage,
- lorsque l'usinage de ladite première zone d'usinage est terminé, une première étape de relâchement au cours de laquelle la première paire de supports relâche la pièce,
- une deuxième étape d'usinage au cours de laquelle la tête d'usinage (106) usine ladite deuxième zone d'usinage,
- une troisième étape de maintien, au cours de laquelle la première paire de supports maintient la pièce au niveau d'une troisième zone d'usinage,
- lorsque l'usinage de ladite deuxième zone d'usinage est terminé, une deuxième étape de relâchement au cours de laquelle la deuxième paire de supports relâche la pièce, et
- une étape de bouclage sur la première étape d'usinage.

## Patentansprüche

1. Maschine zur hybriden Fertigung (100, 200), umfassend:
- einen Rahmen,
- eine Platte (102), die an dem Rahmen befestigt ist und dazu bestimmt ist, als Träger für ein Teil (50, 60) zu dienen,
- einen Druckkopf (104),
- einen Bearbeitungskopf (106), und
- ein Verlagerungssystem, das zwischen dem Rahmen und den Köpfen (104, 106) montiert ist, um jeden Kopf (104, 106) oberhalb der Platte (102) zu verlagern,
- mindestens einen Träger (150, 160, 250) mit mindestens einem Stützkopf (152, 162, 252), wobei der oder jeder Stützkopf (152, 162) dazu bestimmt ist, an einem Abschnitt des Teils (50, 60) abgestützt zu sein, wobei die Maschine **dadurch gekennzeichnet ist, dass** sie mindestens einen gelenkigen Arm (154, 164, 254) umfasst, wobei der oder jeder Arm (154, 164) ein fest mit dem Stützkopf (152, 162, 252) verbundenes erstes Ende und ein fest mit dem Rahmen oder der Platte (102) verbundenes zweites Ende aufweist.

2. Maschine zur hybriden Fertigung (100) nach Anspruch 1, **dadurch gekennzeichnet, dass** der oder mindestens ein Stützkopf (162) ein Kühlsystem (166) beinhaltet, das Kälte erzeugt.

3. Maschine zur hybriden Fertigung (100) nach Anspruch 2, **dadurch gekennzeichnet, dass** der Stützkopf (162) einen Temperatursensor (170) beinhaltet, der die Temperatur an der Fläche des Stützkopfes (162) misst, die dazu bestimmt ist, an dem Teil (50) zu sein, dass die Maschine (100) eine Steuereinheit umfasst, die in Verbindung mit dem Temperatursensor (170) und dem Kühlsystem (166) steht, und dass die Steuereinheit dazu parametriert ist, das Kühlsystem (166) in Abhängigkeit von der von dem Temperatursensor (170) erfassten Temperatur und von einer zu erreichenden Zieltemperatur zu steuern.

4. Maschine zur hybriden Fertigung (100) nach einem der Ansprüche 1 bis 3, **dadurch gekennzeichnet, dass** der oder mindestens ein Stützkopf (152) ein Heizsystem (168) beinhaltet, das Wärme erzeugt.

5. Maschine zur hybriden Fertigung (100) nach Anspruch 4, **dadurch gekennzeichnet, dass** der Stützkopf (152) auch einen Temperatursensor (172) beinhaltet, der die Temperatur an der Fläche des Stützkopfes (152) misst, die dazu bestimmt ist, an dem Teil (50) zu sein, dass die Maschine (100) eine Steuereinheit umfasst, die in Verbindung mit dem Temperatursensor (172) und dem Heizsystem (168) steht, und dass die Steuereinheit dazu parametriert ist, das Heizsystem (168) in Abhängigkeit von der von dem Temperatursensor (172) erfassten Temperatur und von einer zu erreichenden Zieltemperatur zu steuern.

6. Verfahren zur Fertigung eines Teils (50, 60) mit einer Maschine zur hybriden Fertigung (100, 200) nach Anspruch 1, die zwei Paare von Trägern (150, 160, 250) umfasst, wobei das Verfahren umfasst:
- einen ersten Schritt des Haltens, bei dem ein erstes Paar von Trägern das Teil an einem ersten Bearbeitungsbereich hält,
- einen ersten Schritt des Bearbeitens, bei dem der Bearbeitungskopf (106) den ersten Bearbeitungsbereich bearbeitet,
- einen zweiten Schritt des Haltens, bei dem ein zweites Paar von Trägern das Teil an einem zweiten Bearbeitungsbereich hält,
- wenn das Bearbeiten des ersten Bearbeitungsbereichs beendet ist, einen ersten Schritt des Loslassens, bei dem das erste Paar von Trägern das Teil loslässt,
- einen zweiten Schritt des Bearbeitens, bei dem der Bearbeitungskopf (106) den zweiten Bearbeitungsbereich bearbeitet,
- einen dritten Schritt des Haltens, bei dem das erste Paar von Trägern das Teil an einem dritten Bearbeitungsbereich hält,
- wenn das Bearbeiten des zweiten Bearbeitungsbereichs beendet ist, einen zweiten Schritt des Loslassens, bei dem das zweite Paar von Trägern das Teil loslässt, und
- einen Schritt des Zurückspringens zu dem ersten Schritt des Bearbeitens.

## Claims

1. Hybrid manufacturing machine (100, 200) comprising:
- a chassis,
- a worktable (102) fixed to the chassis and intended to serve as a support for a component workpiece (50, 60),
- a print head (104),
- a machining head (106), and
- a displacement system mounted between the chassis and the heads (104, 106) to move each head (104, 106) above the worktable (102),
- at least one support (150, 160, 250) with at least one bearing head (152, 162, 252), the or each bearing head (152, 162) being intended to bear against a part of the component workpiece (50, 60), the machine being **characterized in that** it comprises at least one articulated arm (154, 164, 254), the or each arm (154, 164) having a first end secured to the bearing head (152, 162, 252) and a second end secured to the chassis or to the worktable (102).

2. Hybrid manufacturing machine (100) according to Claim 1, **characterized in that** the or at least one bearing head (162) carries a cooling system (166) which generates cold.

3. Hybrid manufacturing machine (100) according to Claim 2, **characterized in that** the bearing head (162) carries a temperature sensor (170) which measures the temperature at that face of the bearing head (162) that is intended to be against the component workpiece (50), **in that** the machine (100) comprises a control unit which is in communication with the temperature sensor (170) and the cooling system (166) and **in that** the control unit is configured to control the cooling system (166) according to the temperature measured by the temperature sensor (170) and a target temperature to be reached.

4. Hybrid manufacturing machine (100) according to one of Claims 1 to 3, **characterized in that** the or at least one bearing head (152) carries a heating system (168) which generates heat.

5. Hybrid manufacturing machine (100) according to Claim 4, **characterized in that** the bearing head (152) also carries a temperature sensor (172) which measures the temperature at that face of the bearing head (152) that is intended to be against the component workpiece (50), **in that** the machine (100) comprises a control unit which is in communication with the temperature sensor (172) and the heating system (168) and **in that** the control unit is configured to control the heating system (168) according to the temperature measured by the temperature sensor (172) and a target temperature to be reached.

6. Method for manufacturing a component (50, 60) with a hybrid manufacturing machine (100, 200) according to Claim 1 having two pairs of supports (150, 160, 250), wherein the method comprises:
- a first holding step, during which a first pair of supports holds the component workpiece in a first machining zone,
- a first machining step during which the machining head (106) machines said first machining zone,
- a second holding step, during which a second pair of supports holds the component workpiece in a second machining zone,
- when the machining of said first machining zone is completed, a first release step during which the first pair of supports releases the component workpiece,
- a second machining step during which the machining head (106) machines said second machining zone,
- a third holding step, during which the first pair of supports holds the component workpiece in a third machining zone,
- when the machining of said second machining zone is completed, a second release step during which the second pair of supports releases the component workpiece, and
- a step of looping back to the first machining step.
